# EUROPÄISCHE PATENTANMELDUNG

(11) **EP 1 246 055 A1**
(43) Veröffentlichungstag der Anmeldung: **02.10.2002**
(21) Anmeldenummer: 01810317.6
(22) Anmeldetag: 28.03.2001
(51) Int. Cl.: G06F 9/44

(54) **Verfahren zur Verwaltung und zum Zugriff auf Daten**

(71) Anmelder: ABB RESEARCH LTD., 8050 Zürich (CH)
(72) Erfinder: Greiner, Markus, 5000 Aarau (CH)
(74) Vertreter: ABB Patent Attorneys

(57) **Zusammenfassung**

Die Erfindung bezieht sich auf ein Verfahren und ein Computersystem, um ausschließlich unter Zugriff auf eine Binärdatei (B) eines Programmes Daten (16) zu erfassen, die einen zugehörigen Quellcode (Q) des Programmes betreffen. Dabei wird von einem Identifikations-Server (14) ein Quellcode-Identifikator (12) generiert, der den Quellcode (Q) auf eineindeutige Weise bezeichnet. Zu jedem Quellcode-Identifikator (12) werden in einer Tabelle (18) die quellcodespezifischen Daten (16) gespeichert. Der Quellcode-Identifikator (12) wird in den Quellcode (Q) eingefügt, übersetzt und ist damit in der Binärdatei (B) zugreifbar.

## Beschreibung

Die Erfindung betrifft ein Verfahren und ein Computersystem zur Verwaltung und zum Zugriff auf Daten, die sich auf einen Quellcode eines Programmes beziehen, das in einem Netzwerk ausgeführt wird, wobei der Quellcode des Programmes in einen Binärcode übersetzt wird, insbesondere durch Compilierung.

Die Erfindung betrifft insbesondere die Generierung und Verwaltung eines Quellcode-Identifikators, der den Quellcode des Programmes eineindeutig bezeichnet und der in dem Binärcode des Programmes, dem Executable, eingebettet ist.

### Technisches Gebiet

Ein Computerprogramm ist eine Abfolge von Befehlen, die von mindestens einem Prozessor ausgeführt werden. Damit die Maschine das Programm ausführen kann, muß es in maschinenlesbarer Form - als Binärdatei - geladen sein. Diese Form wird auch als Executable bezeichnet. Zur Erstellung des Programmes wird häufig auf andere Sprachen, sogenannte höhere Sprachen, zurückgegriffen, die eine Formulierung der abstrakten Ideen und Prinzipien des Programmes erleichtern. Es ist grundsätzlich auch möglich, ein Programm direkt in einer maschinennahen Sprache zu formulieren. Die Erstellung des Programmes in einer höheren Programmiersprache wird jedoch nicht allein deshalb bevorzugt, da sie eine effizientere Umsetzung von Anweisungseinheiten in die Programmiersprache ermöglicht.

Eine Quelldatei, die das in einer Programmiersprache geschriebene Programm enthält, muß in die maschinenlesbare Form übersetzt werden, damit es von der Maschine ausgeführt werden kann.

Dieser Vorgang wird meistens von einem Compiler ausgeführt. Er umfaßt den Vorgang des Übersetzens, des Assemblierens, des Ladens und Bindens.

In größeren Firmen oder in Firmen mit mehreren Sites werden die ausführbaren Software Programme, insbesondere die Executables, häufig auf verschiedenen Workstations geladen, die an ein Netzwerk angeschlossen sind. Der Programmcode selbst ist dabei entweder firmenintern entwickelt oder anderweitig erworben worden. Im ersten Fall wird der Source- oder Quellcode auf einer Entwicklungsmaschine des Netzwerkes erzeugt und abgelegt. Der Quellcode wird daraufhin von dem Compiler übersetzt und der dadurch entstandene, ausführbare Maschinencode für dieses Programm wird auf eine andere Zielmaschine geladen. Im zweiten Fall, wenn das Softwareprodukt von einer Softwareentwicklungsfirma an einen Kunden ausgeliefert wird, wird nur das Executable zur Verfügung gestellt, während der Quellcode auf einer Maschine bei der Entwicklungsfirma verbleibt.

Programme vor allem innerhalb komplexerer Netzwerke müssen gewartet werden. Um dies effizient auszuführen, können Informationen bzw. Daten, die den Quellcode des Programmes betreffen, hilfreich sein, sofern sie (firmenintern) zur Verfügung stehen. Doch auch bei einer Neuinstallation eines firmeninternen Programmes, kann es wesentlich sein, Hinweise auf den Quellcode zu erhalten.

Da die Quelldatei jedoch meistens an einer anderen Stelle, womöglich auf einer Maschine einer anderen Site, abgelegt sein wird, ist bisher der Rückschluß auf diesbezügliche Informationen allein aus dem ausführbaren Maschinencode, wenn überhaupt, nur sehr schwierig möglich.

### Stand der Technik

Für den oben genannten Zweck enthält der Binärcode bisher Zeichenketten, sogenannte Strings, die beispielsweise die Quellcode Version und das Compilierungsdatum umfassen. Dieser String kann dann aus dem Binärcode extrahiert werden.

Bei portablen Binärcodes, wie beispielsweise Java Class Files, ist teilweise eine Beschreibung der jeweiligen Schnittstellen oder eine Identifikation des Namens der Software Komponente inkludiert.

Es ist mit diesem Vorgehen jedoch nicht möglich, allein ausgehend von der Binärdatei auf umfassende, quellcode-spezifische Informationen, insbesondere auf die Dokumentation zu dem Quellcode und auf die Quellcode Datei an sich zuzugreifen.

In diesem Kontext zeigt die US 6009274 ein Verfahren für ein automatisches Updaten eines Software Programms oder dessen Komponenten innerhalb eines Netzwerkes. Hier wird zwar auch ein Datum der Quelldatei, nämlich die Version des Quellcodes der jeweils installierten Binärdatei, verarbeitet, indem sie mit einer Soll-Version verglichen wird; diese Druckschrift offenbart jedoch keinen Hinweis darauf, weitere Daten, die die Quelldatei betreffen, ausschließlich aus der Binärdatei zu erhalten.

Die US 4558413 zeigt System zur Verwaltung von verschiedenen Versionen eines Softwareprogramms, das die neueste Version in einer verteilten Softwareentwicklungsumgebung über einen eineindeutigen Bezeichner automatisch erfaßt und recompiliert. Auch diese Schrift offenbart jedoch keine Vorgehensweise, um quellcode-spezifischen Daten ohne Zugriff auf die Quelldatei allein aus dem Executable weltweit zur Verfügung zu stellen.

### Darstellung der Erfindung

Aufgabe der vorliegenden Erfindung ist es deshalb, ein effizientes Verfahren für ein Computernetzwerk zur Verfügung zu stellen, das - ausgehend von der Binärdatei - einen Rückschluß auf Daten, die den Quellcode eines Programms betreffen, insbesondere eine weltweite Identifikation des Quellcodes und/oder dessen Dokumentation ermöglicht, ohne auf die Quelldatei zuzugreifen.

Diese Aufgabe wird erfindungsgemäß durch ein Verfahren der eingangs genannten Art gelöst, mit folgenden Schritten:
- Vorsehen eines Quellcode-ldentifikators in dem Binärcode, wobei der Quellcode-Identifikator dem Quellcode eineindeutig zugeordnet ist,
- Generieren einer über das Netzwerk erreichbaren Datenstruktur, in der zu jedem Quellcode-Identifikator die Daten abgelegt sind,
- Zugreifen auf die Daten anhand des auf einer Zielmaschine geladenen Binärcodes, indem der Quellcode-Identifikator aus dem Binärcode erfaßt wird und indem ein Zugriff auf die Daten der Datenstruktur erfolgt, die dem erfaßten Quellcode-Identifikator zugeordnet sind.

Die Aufgabe wird weiterhin durch die Integration eines solchen Verfahrens in ein Quellcode-Management-System oder ein Verwaltungs-System gelöst.

Eine Lösung der Aufgabe gemäß Anspruch 15 sieht ein Computersystem vor, das zur Ausführung eines solchen Verfahrens bestimmt ist, bestehend aus einem Netzwerk mit:
- zumindest einem Identifikations-Server, der dem Quellcode eineindeutig einen Quellcode-ldentifikator zuordnet und
- zumindest einer Zielmaschine, auf der über den Identifikations-Server quellcode-spezifische Daten zugreifbar sind,
- einer Datenstruktur, die von dem Identifikations-Server angelegt wird und die zu jedem Quellcode-ldentifikator die quellcode-spezifischen Daten enthält,
- einer Erfassungseinheit, die den Quellcode-ldentifikator aus dem Binärcode erfaßt, der auf der Zielmaschine geladen ist.

In der bevorzugten Ausführungsform der Erfindung wird das Verfahren angewendet, um ausgehend von dem Binärcode bzw. der Binärdatei den Quellcode zu identifizieren und Zugriff auf die Dokumentation zu diesem Quellcode zu erhalten.

Dabei ist der Quellcode an einer Stelle innerhalb eines Netzwerkes abgelegt und zugehörige Binärfiles sind auf verschiedenen Zielmaschinen geladen. Bei komplexeren (Firmen-)Strukturen ist das Netzwerk ein Wide-Area-Network (WAN), das verschiedene Sites informationstechnisch miteinander verknüpft.

Das Software Wartungspersonal findet an der Zielmaschine vor Ort nur den Binärcode vor und benötigt aber zusätzliche Informationen über die Quelldatei.

Erfindungsgemäß ist deshalb in der Binärdatei ein Quellcode-ldentifikator, insbesondere ein GUID (Global Unique Identifier), eingefügt worden, der den Quellcode eindeutig bezeichnet. Die Suche nach dem Quellcode-ldentifikator in dem Binärcode kann vorteilhafterweise über eine einfache und schnelle Textsuche ausgeführt werden.

Mit Hilfe dieses Quellcode-Identifikators wird dann in einer Datenstruktur nach dem Eintrag gesucht, der diesem Quellcode-Identifikator zugewiesen ist. Der so gefundene Eintrag enthält alle erforderlichen Informationen zu der Quelldatei, insbesondere einen Verweis auf die Dokumentation zu dem Quellcode, und kann auch einen Verweis auf die Quelldatei selbst umfassen.

In einer bevorzugten Ausführungsform der Erfindung ist die Datenstruktur als Tabelle ausgebildet, die zu jedem Quellcode-Identifikator zusätzliche Daten ablegt. Die Datenstruktur kann in ein relationales Datenbanksystem integriert sein, um Queries nach bestimmten quellcode-spezifischen Daten und/oder nach binärcode-spezifischen Daten starten zu können. Dabei umfassen die binärcode-spezifischen Daten, die Daten, die die Compilierung betreffen, wie beispielsweise: Art des Compilers, Version, Datums des Compiles etc.

Bereits zum Zeitpunkt der Erstellung des Quellcodes wird in dem Quellcode eine Variable vorgesehen, die zur Speicherung des Quellcode-ldentifikators bestimmt ist. Nach Fertigstellung und vor Compilierung des Sourcecodes wird jedem Sourcecode bzw. Quellcode von einer zentralen Instanz automatisch der Quellcode-ldentifikator bzw. der GUID zugewiesen. Die Zuweisung erfolgt deshalb vorzugsweise durch eine zentrale Instanz, um sicher zu stellen, daß der Quellcode-Identifikator den jeweiligen Quellcode auch eineindeutig identifiziert. Die zentrale Instanz ist vorzugsweise ein Identifikations-Server.

Weiterhin veranlaßt der Identifikations-Server die Speicherung von quellcode-spezifischen Daten und gegebenenfalls weiteren Informationen zu jedem Quellcode-Identifikator in der Datenstruktur.

Der Quellcode-ldentifikator wird vorzugsweise als ASCII String in die Quelldatei eingefügt und wird bei der Compilierung nicht übersetzt, so daß er ebenfalls in der Binärdatei besteht. Je nach Art und Ausführung des Compilers kann es jedoch auch möglich sein, daß der Quellcode-ldentifikator durch den Vorgang des Compilierens in eine andere Darstellung bzw. in eine erste Repräsentation übersetzt wird. Da diese Darstellung nicht mit der Darstellung in der Datenstruktur übereinstimmt, ist es erfindungsgemäß vorgesehen, die erste Repräsentation in eine zweite Repräsentation zu überführen, die mit der Repräsentation in der Datenstruktur übereinstimmt. Dies wird vorteilhafterweise durch eine Anwendungsroutine ermöglicht, die ebenfalls über dem Identifikations-Server und/oder das Internet verfügbar ist. Die Anwendungsroutine ist vorteilhafterweise Bestandteil der Erfassungseinheit.

Vorteilhafterweise ist das Verfahren nahezu unabhängig von dem verwendeten Compiler, so daß es auch möglich ist, Daten ausgehend von einem Binärcode zu generieren, die sich auf einen anderen - aber verwandten - Quellcode beziehen, oder auf einen Quellcode, der mit einem anderen Compiler übersetzt worden ist. Weiterhin ist es möglich, die Datenstruktur für verschiedene Quellcodes zu verwenden, insbesondere für Quellcodes, die mit einem unterschiedlichen Compiler übersetzt worden sind.

Als weitere Vorteil läßt sich festhalten, daß das Verfahren unabhängig von der Wahl der Programmiersprache ist. Unabhängig davon, ob beispielsweise Java oder C++ eingesetzt wird, wird in der Quelldatei eine Variable definiert, die vorzugsweise mit dem als ASCII String ausgebildeten Quellcode-ldentifikator belegt wird.

Erfindungsgemäß wird der Quellcode-Identifikator automatisch generiert und zugewiesen. Dabei wird vorteilhafterweise durch eine Suchfunktion, insbesondere durch Verwendung einer Hash-Tabelle mit mehreren Einträgen, wie z.B. 'Dateiname', 'Quersumme', Datum', 'Zeit' etc. erreicht, daß der Quellcode-ldentifikator den Quellcode mit sehr hoher Wahrscheinlichkeit weltweit eineindeutig identifiziert, so daß auch URL-Links in der Datenstruktur möglich sind.

Die Erfindung ist ebenso für Programme anzuwenden, deren Quellcode nicht einem Compiler sondern einem Interpreter zugeführt worden ist.

Ein wesentlicher Vorteil des erfindungsgemäßen Verfahrens ist darin zu sehen, daß es weiteren Techniken vorgeschaltet werden kann, insbesondere Techniken, die das 'Reverse Engineering' betreffen. Ausgehend von dem Binärcode entsteht bei der Anwendung des Programmes der Bedarf, die Software neuen Gegebenheiten anzupassen und/oder zu erweitern. Damit sie nicht nochmals und teilweise redundant entwickelt werden muß, wird auf dem Quellcode aufgesetzt, um diesen mit weiteren Konstrukten anzureichern.

### Kurze Beschreibung der Zeichnungen

Weitere Vorteile, Merkmale und alternative Ausführungsformen der Erfindung ergeben sich aus der nachfolgenden detaillierten Figurenbeschreibung, die in Zusammenhang mit der Zeichnung zu lesen ist, in der:
Fig. 1 eine schematische Darstellung von Elementen des erfindungsgemäßen Verfahrens,
Fig. 2 eine schematische Darstellung einer erfindungsgemäß verwendeten Datenstruktur und
Fig. 3 ein Ablaufdiagramm des erfindungsgemäßen Verfahrens in einer bevorzugten Ausführungsform ist.

### Wege zur Ausführung der Erfindung

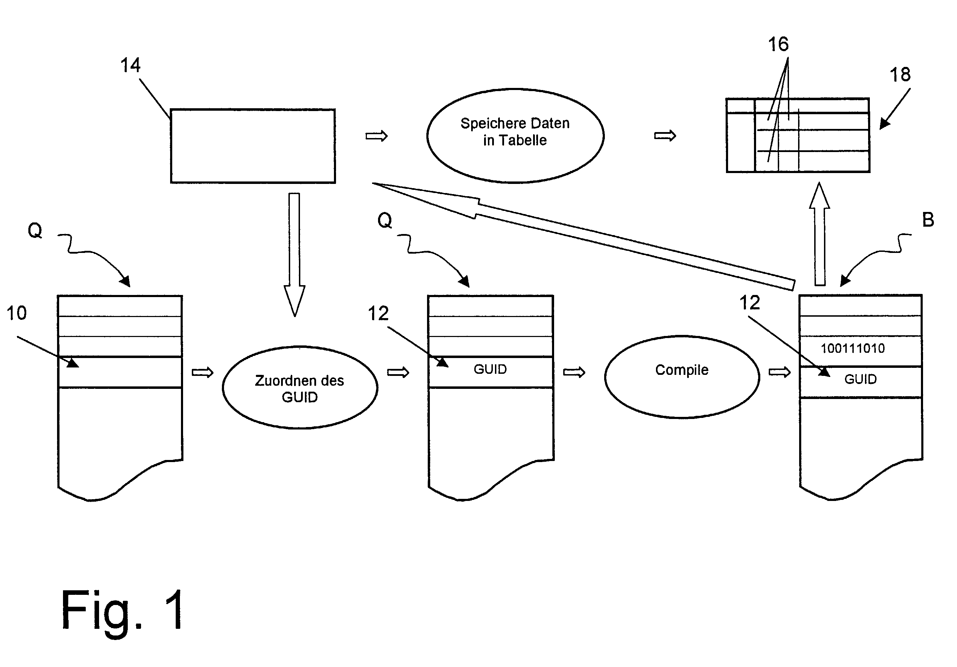

Unter Bezugnahme auf Figur 1 werden nachfolgend die wesentlichen Elemente für die Durchführung des Verfahrens erläutert.

Bei der Generierung eines Quellcodes Q wird eine Variable 10 vorgesehen, die zur Speicherung eines Quellcode-ldentifikators 12 bestimmt ist. Der Quellcode-Identifikator 12 ist in der hier beschriebenen Ausführungsform als 'Global Unique Identifier' GUID 12 ausgebildet. Der GUID 12 ist vorzugsweise ein ASCII String.

Der GUID 12 wird von einer zentralen Instanz, hier von einem Identifikations-Server 14 automatisch generiert. Die Variable 10 wird mit dem Wert des GUID 12 belegt. Dieser Verfahrensschritt entspricht einem Stempeln des GUID 12 in den Quellcode Q.

Der Identifikations-Server 14 veranlaßt zudem, daß zu jedem GUID 12 Daten 16 in einer Datenstruktur, insbesondere in einer Tabelle 18 gespeichert werden.

Nun kann der Quellcode einem Compiler zugeführt werden, der den Quellcode Q in den Binärcode B bzw. das Executable übersetzt. Der Binärcode B umfaßt neben maschinenlesbaren Befehlen den GUID 12.

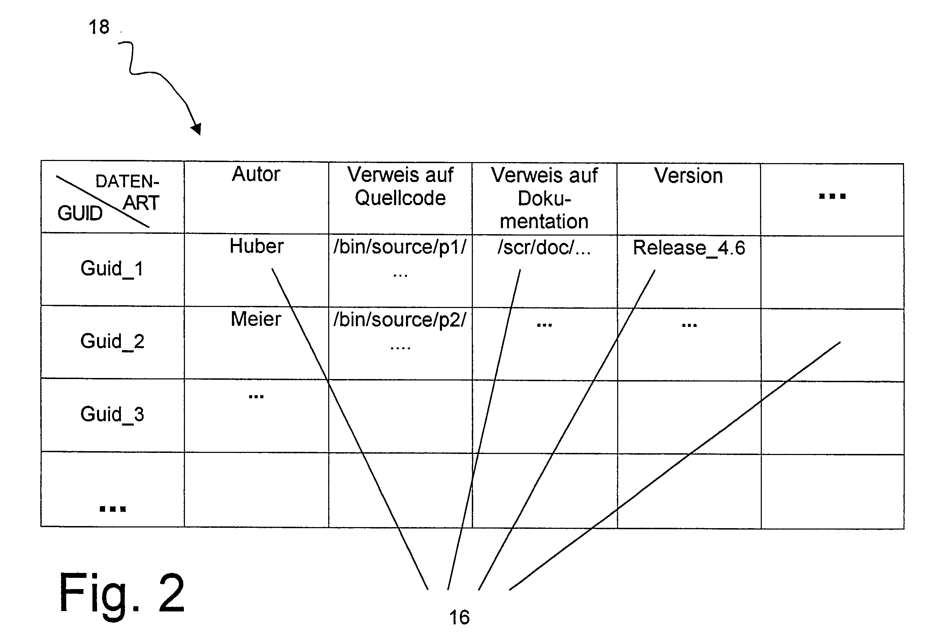

Figur 2 zeigt die Tabelle 18 mit angedeuteten Einträgen. Sie enthält für jeden vom Identifikations-Server 14 vergebenen GUID 12 zumindest einen Parameter. Die Parameter bzw. Datenarten bestehen aus den quellcode-spezifischen Daten 16: Autor, URL-Link auf Dokumentation, URL-Link auf Quellcode, Version, Datum der Erstellung. Hier können vorteilhafterweise erfindungsgemäß noch weitere Daten hinzugefügt werden, indem die Tabelle 18 um die entsprechenden Parameter erweitert wird, ohne daß das erfindungsgemäße Verfahren abgewandelt werden muß.

In der bevorzugten Ausführungsform umfassen die Daten 16, alle Informationen, die ausgehend vom Binärcode B für die Identifikation des entsprechenden Quellcodes Q notwendig sind und/oder für die Identifikation der Quellcode-Dokumentation.

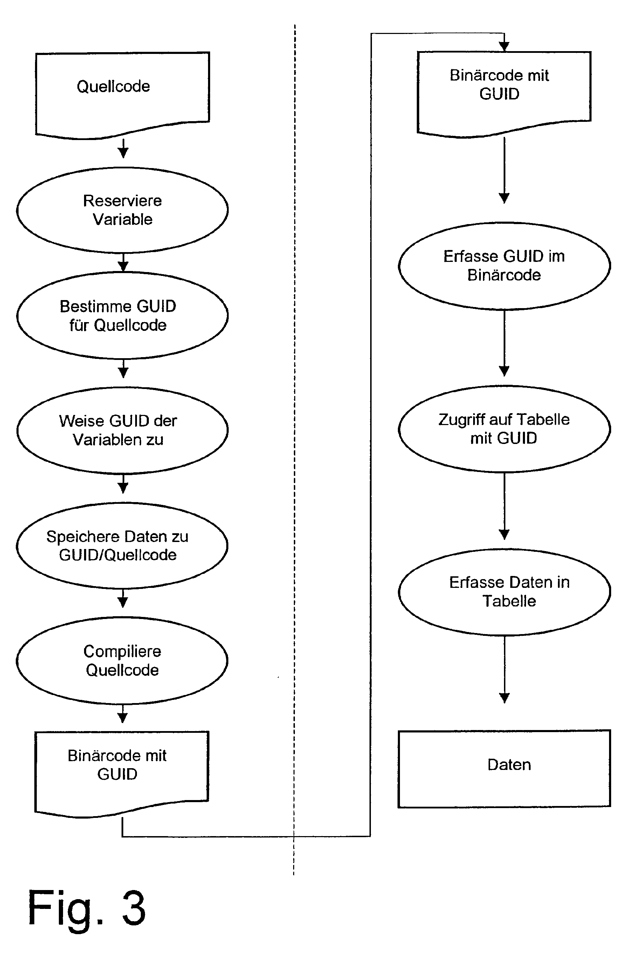

Im folgenden wird unter Bezugnahme auf Figur 3 der Ablauf des erfindungsgemäßen Verfahrens vorgestellt:

In dem von einem Softwareentwickler erstellten Quellcode Q wird die Variable 10 vorgesehen.

Der Identifikations-Server 14 ruft ein Verfahren auf, das den GUID 12 für den Quellcode Q generiert. Der GUID 12 ist so gewählt, daß er ein weltweit eineindeutiger Bezeichner für den Quellcode Q ist. Nun kann der GUID 12 der Variablen 10 in dem Quellcode Q zugewiesen werden.

Anschließend veranlaßt der Identifikations-Server 14 zu jedem GUID 12 die Speicherung der quellcode-spezifischen Daten 16 in der Tabelle 18.

Der Quellcode Q wird daraufhin mit dem zusätzlichen ASCII Datenstring, dem GUID 12, übersetzt. Damit wird der erfindungsgemäße, um den GUID 12 angereicherte Binärcode B erzeugt. Damit ist ein erster Abschnitt des Verfahrens abgeschlossen, der sich auf die Vorbereitung und die Generierung der Daten 16 bezieht. Er ist in Figur 3 durch die vertikale, gestrichelte Linie von einem nachfolgenden, zweiten Abschnitt - dem Abruf der Daten 16 - getrennt.

In dem zweiten Abschnitt werden die Daten 16 ausschließlich anhand der jeweiligen Binärdatei B hergeleitet, ohne auf die Quelldatei Q zugreifen zu müssen und ohne daß eine teilweise oder vollständige Decompilierung angestoßen werden muß. Mit einer Textsuche wird in der Binärdatei B der Datenstring des GUID 12 gesucht und erfaßt.

Mit dem GUID 12 wird auf die Tabelle 18 zugegriffen und nach den Einträgen gesucht, die dem GUID 12 zugeordnet sind. Die somit hergeleiteten Daten 16 können nun für weitere Verarbeitungsschritte des Binärfiles B herangezogen werden.

In der in der Praxis verwendeten Ausführungsform, die sich als vorteilhaft herausgestellt hat, greift das Verfahren auf eine weitere Routine zu, um die verschiedenen Repräsentationen des GUID 12 ineinander umzuwandeln. Es ist möglich, daß nach der Übersetzung des Quellcodes Q der GUID 12 nicht mehr in seiner ursprünglichen Darstellungsform existiert, sondern beispielsweise in einer compiler-spezifischen, ersten Repräsentation. Die erste Repräsentation wird anhand einer ebenfalls über den Identifikations-Server 14 zugänglichen Routine in ein zweites Format bzw. in eine zweite Repräsentation umgewandelt, die ihrerseits mit der Repräsentation in der Tabelle 18 übereinstimmt.

In einer alternativen Ausführungsform der Erfindung wird ein Sprache verwendet, die nicht einem Compiler, sondern einen Interpreter zugeführt wird, der die Befehle zugleich ausführt. Dann wird der GUID 12 in einer Interpreter-Ergebnis-Datei festgehalten.

Ein Vorteil des erfindungsgemäßen Verfahrens ist, daß kein Decompiler notwendig ist, um auf die Daten 16 zugreifen zu können. Dieser ist bisher im Stand der Technik erforderlich, um die Daten 16 ausschließlich aus dem Binary bzw. Binärcode B ableiten zu können. Im Gegensatz dazu wird erfindungsgemäß ein eineindeutiger GUID-Stempel generiert, mit dem anschließend der Quellcode Q 'gestempelt' wird. Zu jedem Stempel werden in der Datenstruktur 18 die zugehörigen Daten 16 erfaßt. Nach Compilierung des gestempelten Quellcodes Q wird der Stempel aus dem Binärcode ausgelesen, um auf die Daten 16 zugreifen zu können, die dem Stempel zugeordnet sind.

Der Quellcode Q betrifft ein Benutzerprogramm. Es ist jedoch auch möglich, dem Verfahren gemäß der Erfindung bestimmte Systemroutinen zu unterziehen.

### Bezugszeichenliste

- Q: Quellcode
- B: Binärcode
- 10: Variable
- 12: GUID, Global Unique Identifier
- 14: Identifikations-Server
- 16: Daten
- 18: Tabelle

## Patentansprüche

1. Verfahren zur Verwaltung und zum Zugriff auf Daten (16), die sich auf einen Quellcode (Q) eines Programms innerhalb eines Netzwerkes beziehen, wobei der Quellcode (Q) in einen ausführbaren Binärcode (B) übersetzt wird, mit folgenden Schritten:
- Vorsehen eines Quellcode-Identifikators (12) in dem Binärcode (B), der dem Quellcode (Q) eineindeutig zugeordnet ist,
- Generieren einer über das Netzwerk erreichbaren Datenstruktur (18), in der zu jedem Quellcode-ldentifikator (12) die Daten (16) abgelegt sind und
- Zugreifen auf die Daten (16) anhand des auf einer Zielmaschine geladenen Binärcodes (B), indem der Quellcode-ldentifikator (12) aus dem Binärcode (B) erfaßt wird und indem ein Zugriff auf die Daten (16) der Datenstruktur (18) erfolgt, die dem erfaßten Quellcode-ldentifikator (12) zugeordnet sind.

2. Verfahren nach Anspruch 1,
**dadurch gekennzeichnet, daß**
der Quellcode-Identifikator (12) von einer zentralen Instanz, insbesondere einem Programm-Server (14), bestimmt wird.

3. Verfahren nach mindestens einem der vorstehenden Ansprüche,
**dadurch gekennzeichnet, daß**
die Zuordnung des Quellcode-Identifikators (12) zu einem Quellcode (Q) nach einem vorbestimmten Verfahren automatisch erfolgt.

4. Verfahren nach mindestens einem der vorstehenden Ansprüche,
**dadurch gekennzeichnet, daß**
die Zuordnung zwischen dem Quellcode-ldentifikator (12) und dem Quellcode (Q) jeweils innerhalb des Netzwerkes eineindeutig ist und/oder innerhalb des Internet eineindeutig ist.

5. Verfahren nach mindestens einem der vorstehenden Ansprüche,
**dadurch gekennzeichnet, daß**
die Datenstruktur (18) Verweise umfaßt, die auf den Quellcode (Q) und/oder auf quellcode-spezifische Daten (16) verweisen.

6. Verfahren nach mindestens einem der vorstehenden Ansprüche,
**dadurch gekennzeichnet, daß**
die Datenstruktur (18) in einer relationalen Datenbank integriert ist, die quellcodespezifisch und/oder binärcode-spezifische Abfragen erlaubt.

7. Verfahren nach mindestens einem der vorstehenden Ansprüche,
**dadurch gekennzeichnet, daß**
der Zugriff auf die Datenstruktur (18) und/oder auf Daten der Datenstruktur (18) eine Zugangsberechtigung erfordert.

8. Verfahren nach mindestens einem der vorstehenden Ansprüche,
**dadurch gekennzeichnet, daß**
die Datenstruktur (18) zumindest eine URL-Adresse umfaßt, die insbesondere auf den Quellcode (Q) und auf die quellcode-spezifischen Daten (16) verweist.

9. Verfahren nach mindestens einem der vorstehenden Ansprüche,
**dadurch gekennzeichnet, daß**
die Daten (16) zumindest folgende(n) Parameter umfassen: Dokumentation zu dem Quellcode und/oder Version des Quellcodes und/oder Autor des Quellcodes und/oder Zugriffsrechte auf den Quellcode und/oder vorgesehene Schnittstellen und/oder Art des Compilers.

10. Verfahren nach mindestens einem der vorstehenden Ansprüche,
**dadurch gekennzeichnet, daß**
die Daten (16) einen Verweis auf den Quellcode (Q) umfassen.

11. Verfahren nach mindestens einem der vorstehenden Ansprüche,
**dadurch gekennzeichnet, daß**
der Quellcode-ldentifikator (12) ein ASCII String ist.

12. Verfahren nach mindestens einem der vorstehenden Ansprüche,
**dadurch gekennzeichnet, daß**
der Quellcode-ldentifikator (12) durch das Compilieren in eine erste Repräsentation übersetzt wird, die in eine zweite Repräsentation umgewandelt wird, wobei die zweite Repräsentation mit der Repräsentation in der Datenstruktur (18) übereinstimmt.

13. Verfahren nach mindestens einem der vorstehenden Ansprüche,
**dadurch gekennzeichnet, daß**
auf der Zielmaschine lediglich der Binärcode (B) geladen ist und der Quellcode (Q) und die Daten (16) auf einer anderen Maschine des Netzwerkes gespeichert sind.

14. Verwendung des Verfahrens nach mindestens einem der vorstehenden Ansprüche,
**dadurch gekennzeichnet, daß**
das Verfahren in ein Quellcode-Management-System oder in ein Software-Verwaltungssystem integriert ist.

15. Computersystem das zur Ausführung des Verfahrens nach mindestens einem der vorstehenden Ansprüche bestimmt ist, bestehend aus einem Netzwerk mit:
- zumindest einem Identifikations-Server (14), der dem Quellcode (Q) eineindeutig einen Quellcode-Identifikator (12) zuordnet und
- zumindest einer Zielmaschine, auf der über den Identifikations-Server (14) quellcode-spezifische Daten (16) zugreifbar sind,
- einer Datenstruktur (18), die von dem Identifikations-Server (14) angelegt wird und die zu jedem Quellcode-ldentifikator (12) die quellcode-spezifischen Daten (16) enthält,
- einer Erfassungseinheit, die den Quellcode-Identifikator (12) aus dem Binärcode (B) erfaßt, der auf der Zielmaschine geladen ist.

16. Computersystem nach Anspruch 15,
**dadurch gekennzeichnet, daß**
das Computersystem Zugriffe über das Internet umfaßt und daß quellcode-spezifische Daten (16) ausgehend von dem Binärcode (B) auf der Zielmaschine über das Internet eineindeutig zugreifbar sind.
